# EUROPÄISCHE PATENTSCHRIFT

(11) **EP 2 116 490 B1**
(45) Veröffentlichungstag und Bekanntmachung des Hinweises auf die Patenterteilung: **18.04.2012**
(21) Anmeldenummer: 09159151.1
(22) Anmeldetag: 30.04.2009
(51) Int. Cl.: B65G 29/00, B65G 47/84

(54) **Schnellwechselbare Vorrichtung zum Transportieren von Behältnissen**
Quickly exchangeable device for transporting containers
Dispositif rapidement échangeable pour le transport de récipients

(30) Priorität: 08.05.2008 DE 102008022611
(43) Veröffentlichungstag der Anmeldung: 11.11.2009
(73) Patentinhaber: Krones AG, 93073 Neutraubling (DE)
(72) Erfinder: Dewert, Andreas, 93083 Obertraubling (DE)
(74) Vertreter: Bittner, Bernhard

(56) Entgegenhaltungen:
- EP-A- 1 141 561
- WO-A-2007/125553
- DE-A1- 19 539 694

## Beschreibung

Die vorliegende Erfindung bezieht sich auf eine Vorrichtung zum Transportieren von Behältnissen. Die Vorrichtung wird unter Bezugnahme auf einen Flaschenverschließer beschrieben, der Behältnisse insbesondere mit Kronkorken verschließt. Es wird jedoch darauf hingewiesen, dass die erfindungsgemäße Vorrichtung für andere Transportvorrichtungen für Behältnisse verwendet werden kann. Derartige Flaschenverschließer weisen oftmals als Transporteinrichtungen Transporträder oder Transportringe auf, die in ihrem Außenumfang Aufnahmetaschen für die Behältnisse aufweisen und die drehbar um eine bestimmte Drehachse angeordnet sind.

So beschreibt beispielsweise die WO 2007/125553 A1 ein Sternrad, welches eine Vielzahl von Segmenten aufweist, die an einem gemeinsamen Träger angeordnet sind. Dabei können die Segmente zur Demontage gegenüber dem Träger geschwenkt werden. Im Arbeitsbetrieb muss daher das Sternrad gegen Verdrehung gegenüber dem Träger gesichert werden.

Aus der US 4,075,086 ist eine Behandlungsvorrichtung zum Behandeln von Glasbehältern bekannt. Auch hier ist ein Transportrad vorgesehen, welches an seinem Außenumfang einzeln auswechselbare Ausnehmungskörper aufweist, in welche die Halsbereiche der Behältnisse eingreifen.

Die DE 10 2004 056 858 A1 beschreibt eine Fördereinrichtung. Bei dieser Fördereinrichtung ist eine Außenführung, die um ein Transportrad angeordnet ist, mehrsegmentig ausgeführt.

Aus der DE 195 39 694 A1 ist ein schnellwechselndes Sternrad für eine Verschließmaschine bekannt. Dabei ist ein segmentiertes Sternrad vorgesehen, wobei zu dessen Auswechslung jedoch ein Anlagenteil in der Richtung der Drehachse dieses Sternrads bewegt werden muss, um das Sternrad auswechseln zu können.

Die US 5,689,932 beschreibt ein Verfahren zum schnellen Auswechseln bei Befüllungs- und Verschließmaschinen. Dabei ist ein drehbares Sternrad vorgesehen, in dem eine Vielzahl von Trägervorrichtungen lösbar angeordnet ist. Bei der Umstellung auf eine andere Garnitur müssen hierbei jedoch die einzelnen Trägervorrichtungen separat eingewechselt werden.

Aus der DE 101 57 918 A1 ist ein Sternrad für eine Glasbehälterprüfmaschine bekannt. Diese Anordnung weist eine drehbare vertikale Welle und obere und untere Nabenanordnungen auf, die an der Welle befestigt sind.

Der vorliegenden Erfindung liegt die Aufgabe zugrunde, eine Transporteinrichtung zur Verfügung zu stellen, welche einen schnellen Garniturenwechsel erlaubt und gleichwohl einen sicheren Betrieb ermöglicht.

Dies wird erfindungsgemäß durch den Gegenstand des unabhängigen Anspruchs 1 erreicht. Vorteilhafte Ausführungsformen und Weiterbildungen sind Gegenstand der Unteransprüche.

Eine erfindungsgemäße Vorrichtung zum Transportieren von Behältnissen weist einen um eine vorgegebene geometrische Drehachse drehbar angeordneten aus wenigstens zwei Segmenten aufgebauten Transportkörper auf, der eine Vielzahl von Öffnungen und an seinem Außenumfang eine Vielzahl von Ausnehmungen zur Aufnahme wenigstens eines Bereichs der zu transportierenden Behältnisse aufweist. Weiterhin weist die Vorrichtung eine Vielzahl von Haltekörpern zum Halten des Transportkörpers bzw. dessen Segmente auf, wobei sich eine Erstreckungsrichtung L dieser Haltekörper in einem von 0° verschiedenen Winkel gegenüber einer Ebene des Transportkörpers erstreckt und wobei wenigstens ein Eingriffsbereich jedes dieser Haltekörper in jeweils einer der Öffnungen angeordnet ist.

Erfindungsgemäß ist der Querschnitt wenigstens einiger dieser Öffnungen größer als der Querschnitt des Eingriffsbereichs der Haltekörper der in diesen Öffnungen angeordnet ist, so dass die Segmente wenigstens zeitweise gegenüber den Haltekörpern in einer senkrechten zu der Drehachse stehenden Richtung bewegbar sind.

Während bei einigen der aus dem Stand der Technik bekannten Vorrichtungen ein Lösen des Transportkörpers durch eine Bewegung in Richtung der Drehachse erfolgt, was oft schwierig zu bewerkstelligen ist, wird durch die Öffnungen bzw. die Eingriffsbereiche erreicht, dass der Transportkörper nicht in der Längsrichtung der Drehachse bewegt werden muss, sondern zum Lösen auch senkrecht hierzu bewegt werden kann. Allgemein wird durch die Erfindung ermöglicht, dass die Segmente des Transportkörpers bzw. Transportrades in einer anderen Richtung als der Richtung der Drehachse bewegbar sind.

Vorzugsweise handelt es sich bei den Haltekörpern um Haltestangen und die Erstreckungsrichtung ist eine Längsrichtung dieser Haltestangen. Es wäre jedoch auch möglich, dass die Haltekörper beispielsweise L-förmig ausgebildet sind und sich ein Teil der Haltekörper in Richtung der Drehachse erstreckt und ein anderer Bereich senkrecht hierzu ist. Vorzugsweise erstrecken sich die Haltestangen senkrecht gegenüber der Ebene des Transportkörpers und besonders bevorzugt erstrecken sich die Haltestangen ausgehend von dem Transportkörper nach oben.

Bei einer Bewegung in der Ebene des Transportkörpers handelt es sich insbesondere um eine radiale Bewegung der Segmente wobei jedoch auch eine Bewegung in der Umfangsrichtung denkbar wäre. Vorzugsweise sind die Ausnehmungen direkt in dem Transportkörper angeordnet bzw, einteilig in diesem Transportkörper ausgebildet. Dies bedeutet, dass im Gegensatz zu einigen der im Stand der Technik bekannten Vorrichtungen die Ausnehmungen nicht von dem Transportkörper trennbar sind.

Bei einer weiteren vorteilhaften Ausführungsform weist die Vorrichtung wenigstens eine Verbindungseinrichtung auf um die Segmente lösbar miteinander zu verbinden.

Zum Auswechseln des Transportkörpers werden zunächst die Verbindungseinrichtungen gelöst und anschließend können die Segmente vorzugsweise in radialer Richtung, jedoch insbesondere in einer zu der Drehachse senkrecht stehenden Ebene bewegt werden.

Bei einer weiteren vorteilhaften Ausführungsform weist wenigstens eine Öffnung einen kreisförmigen Öffnungsabschnitt und ein sich an diesen kreisförmigen Abschnitt anschließendes Langloch auf. Vorzugsweise weisen alle Öffnungen eines Segments jeweils kreisförmige Öffnungsabschnitte und sich an diese kreisförmigen Öffnungsabschnitte anschließende Langlöcher auf, wobei sich die Langlöcher gegenüber den kreisförmigen Öffnungsabschnitten bevorzugt im Wesentlichen in der gleichen Richtung erstrecken. Auf diese Weise ist es möglich, dass nach einem Lösen der oben erwähnten Verbindungseinrichtung die beiden Segmente in einer bestimmten Vorzugsrichtung, welche durch die Richtung der Langlöcher bestimmt ist, bewegt werden können und anschließend vorzugsweise durch eine Bewegung in der Richtung der Drehachse von der Vorrichtung entnommen werden können. Die Öffnungen sind vorzugsweise Löcher und besonders bevorzugt Löcher, die sich senkrecht zu der Ebene des Transportkörpers erstrecken.

Vorzugsweise verlaufen die Langlöcher geradlinig. Es wäre jedoch auch möglich, dass die Langlöcher zumindest abschnittsweise gekrümmt sind.

Bei einer weiteren vorteilhaften Ausführungsform weisen die Haltekörper in dem Eingriffsbereich eine umlaufende Nut auf, wobei der kleinste Durchmesser dieser Nut geringer ist, als die Breite des Langlochs. Dies bedeutet, dass im arretierten Zustand keine Verschiebung der Segmente bzw. des Transportkörpers in Richtung der Drehachse gegenüber dem Haltekörper möglich ist, jedoch im entriegelten Zustand die Segmente gegenüber den Haltekörpern verschiebbar sind.

Vorzugsweise weist die umlaufende Nut einen kreisförmigen Querschnitt auf und der Durchmesser dieser kreisförmigen Nut ist geringer als die Breite des Langlochs, so dass der Eingriffsbereich gegenüber der Nut verschiebbar ist.

Vorzugsweise ist ein Stirnkörper der Haltekörper durch wenigstens einen Bereich der Öffnung durchführbar. Unter dem Stirnkörper wird dabei insbesondere der unterste Abschnitt der Haltekörper bzw. Haltestangen verstanden. Durch diese Ausführungsform wird erreicht, dass die Segmente des Transportkörpers zunächst in Richtung der Drehachse ein- oder ausgebaut werden können, um sie anschließend insbesondere gegenüber den Langlöchern verschieben.

Vorzugsweise ist ein Stirnkörper der Haltekörper durch wenigstens einen Bereich der Öffnungen nicht durchführbar. Vorzugsweise handelt es sich in diesem genannten Bereich um die oben erwähnten Langlöcher der Öffnungen.

Bei einer weiteren vorteilhaften Ausführungsform weist die Verbindungseinrichtung einen an einem Segment angeordneten schwenkbaren Hebel auf, der eine Ausnehmung aufweist, welche ein an einem anderen Segment angeordneten Bolzen zum Verbinden der Segmente hintergreift. Vorzugsweise ist dabei der Hebel ohne Einsatz von Werkzeug von Hand betätigbar. Auf diese Weise kann ein sehr schnelles Wechseln der Garnituren ohne den Einsatz von Werkzeug ermöglicht werden, indem zunächst der besagte Hebel gelöst wird und anschließend die Segmente entnommen werden können.

Bevorzugt sind dabei die Langlöcher derart angeordnet, dass die Segmente in einer Richtung bewegbar sind, die senkrecht zu einer Trennungslinie zwischen den Segmenten verläuft.

Vorzugsweise erstreckt sich keines der Langlöcher in der Umfangsrichtung des Transportkörpers. Auf diese Weise wird die Stabilität im Betrieb erhöht, da eine Drehung des Transportkörpers gegenüber den Haltekörpern durch die Erstreckungsrichtungen aller Langlöcher verhindert wird.

Bei einer weiteren vorteilhaften Ausführungsform weist wenigstens ein Haltekörper einen Vorspannkörper auf, der gegenüber dem Stirnkörper in der Längsrichtung des Haltekörpers bewegbar ist. Auf diese Weise wird im zusammengebauten Zustand eine Arretierung des Transportkörpers erreicht. Dabei ist es beispielsweise möglich, dass der Vorspannkörper gegenüber der Haltestange durch einen O-Ring gelagert ist und dieser O-Ring gleichzeitig als elastisches Element wirkt, welches eine Vorspannung im Vorspannkörper erzeugt. Vorzugsweise ist in der Längsrichtung des Haltekörpers zwischen dem Sternkörper und dem Vorspannkörper der oben erwähnte Eingriffsbereich angeordnet.

Die vorliegende Erfindung ist weiterhin auf eine Vorrichtung der oben beschriebenen Art gerichtet, wobei alle Haltestangen an einem gemeinsamen Träger angeordnet sind. Auf diese Weise wird die Stabilität der Vorrichtung erhöht.

Die vorliegende Erfindung ist weiterhin auf eine Anlage zum Verschließen von Behältnissen von Verschlüssen gerichtet, welche eine Vorrichtung der oben beschriebenen Art aufweist, sowie eine Verschließeinrichtung, welche die Verschlüsse fest an den Behältnissen anbringt.

Weitere vorteilhafte Ausführungsformen ergeben sich aus beigefügten Zeichnungen:

### Darin zeigen:

- Fig. 1: Eine teilweise Ansicht einer erfindungsgemäßen Transporteinrichtung für Behältnisse;
- Fig. 2a: einen Transportkörper mit Haltekörper in einer ersten Ansicht;
- Fig. 2b: einen Transportkörper in einer Ansicht von unten;
- Fig. 3a: eine perspektivische Ansicht des Transportkörpers;
- Fig. 3b: eine Draufsicht von unten auf den Transportkörper aus Fig. 3a;
- Fig. 3c: eine Draufsicht von oben auf den Transportkörper aus Fig. 3a;
- Fig. 4: eine Schnittdarstellung eines Haltekörpers.

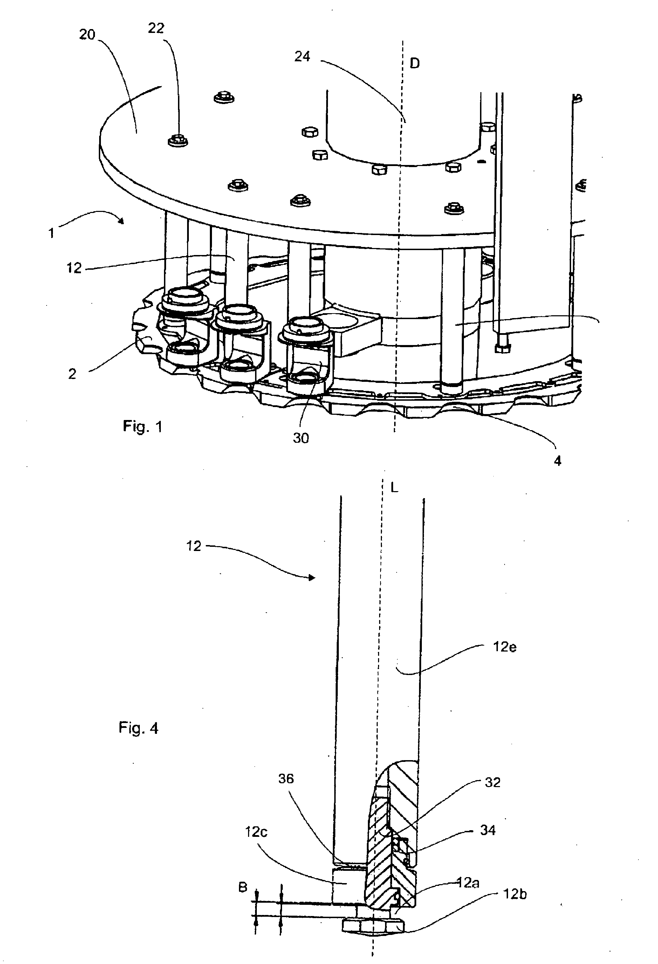

Fig. 1 zeigt eine erfindungsgemäße Vorrichtung 1 zum Transportieren von (nicht gezeigt) Behältnissen, genauer gesagt eine Vorrichtung zum Bestücken von Behältnissen mit Kronkorken. Dabei ist eine Vielzahl von Verschließeinrichtungen 30 vorgesehen, welche in Umfangsrichtung um einen Transportkörper 2 herum, bzw. oberhalb desselben angeordnet sind. An dem Außenumfang dieses Transportkörpers sind Ausnehmungen 4 angeordnet, in welche Halsbereiche der zu transportierenden bzw. zu verschließenden Behältnisse eingreifen können. Dieser Transportkörper der hier eine ringförmige Gestalt aufweist, ist um eine Drehachse D drehbar angeordnet. Daneben ist eine Vielzahl von Haltekörpern 12 vorgesehen, an welchen der Transportkörper 2 im Arbeitsbetrieb fest angeordnet ist. Diese Haltekörper 12 wiederum sind mittels Schrauben 22 in einem gemeinsamen Träger 20 eingeschraubt. Das Bezugszeichen 24 bezieht sich auf eine Welle, an der der Transportkörper 2 zur Drehung um die Drehachse D angeordnet ist.

Die Vorrichtung weist weiterhin eine weitere (nicht gezeigte) stationär angeordnete Führungsschiene auf, die radial außerhalb des Transportkörpers 2 verläuft. Die Behältnisse werden zwischen dieser äußeren Führungsschiene und dem Transportkörper geführt, genauer gesagt, werden die Behältnisse einerseits in den Ausnehmungen 4 und andererseits an einem Innenumfang dieser weiteren Führungsschiene geführt.

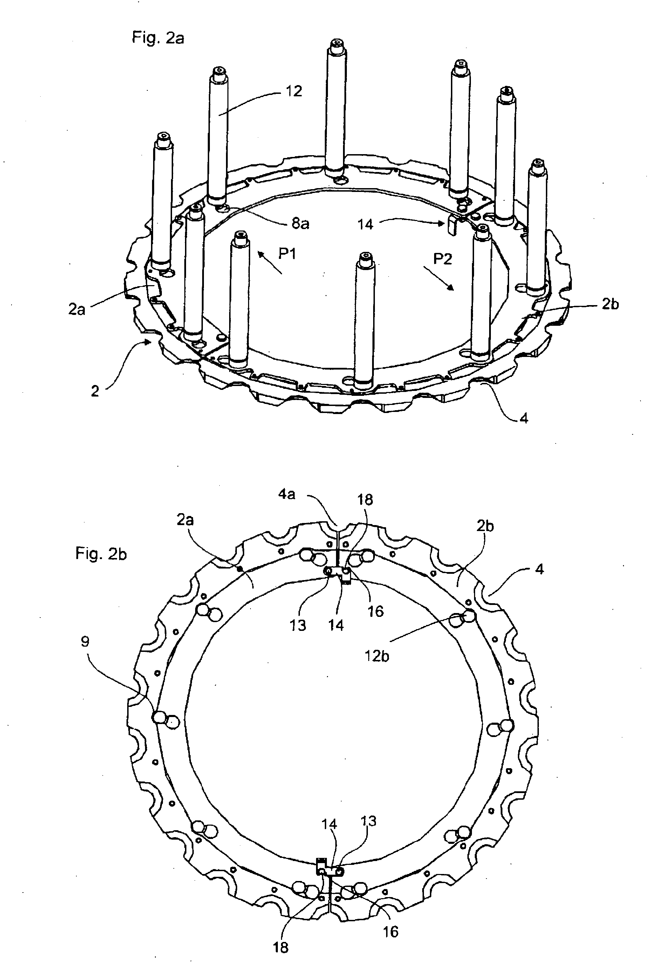

Fig. 2a zeigt einen Transportkörper 2 mit an ihm angeordneten Haltekörpern 12. Dabei ist der Transportkörper 2 hier aus zwei Segmenten 2a und 2b aufgebaut, die ein jeweils halbkreisförmiges Profil aufweisen. Die beiden Segmente 2a und 2b sind mittels einer Verbindungseinrichtung 14 lösbar miteinander verbunden.

Die einzelnen Haltekörper 12 erstrecken sich senkrecht bezüglich der Ebene des Transportkörpers 2. Damit erstrecken sich die Längsrichtungen der Haltekörper 12 auch parallel zu der (in Fig. 2a nicht gezeigten) Drehachse des Transportkörpers.

Der Transportkörper 2 ist hier zweiteilig aufgebaut, wobei jedoch die beiden Teile des Transportkörpers 2 beispielsweise mittels Nietverbindungen dauerhaft und fest miteinander verbunden sind. Es wäre jedoch auch möglich, den Transportkörper 2 einteilig auszubilden. Man erkennt, dass die Ausnehmungen 4 am Außenumfang jeweils gleich weit voneinander beabstandet sind und hier ein speziell an die zu transportierenden Behältnisse angepasstes Profil aufweisen.

Um eine entsprechende Transportvorrichtung flexibel umstellen zu können, wurde die hier vorliegende Erfindung entwickelt.

In dem Transportkörper 2 ist eine Vielzahl von Öffnungen vorhanden, von denen hier jeweils nur ein Öffnungsabschnitt 8a sichtbar ist und ein Abschnitt des Haltekörpers sich durch einen weiteren Abschnitt dieser Öffnung erstreckt. Man erkennt jedoch, dass der Querschnitt dieser Öffnungen jedenfalls größer ist als der Querschnitt des durch die Öffnungen durchtretenden Bereichs des Haltekörpers. Zum Lösen der Segmente gegenüber den Haltekörpern wird zunächst die Verbindungseinrichtung 14 und eine weitere Verbindungseinrichtung 14 gelöst. Anschließend kann das in Fig. 2a gezeigte linke Segment in Fig. 2a entlang des Pfeils P1 gezogen werden und das Segment 2b entlang des Pfeils P2. Auf diese Weise gelangen dann (nicht gezeigt) Stirnkörper der Haltekörper in dem Bereich der kreisförmigen Öffnungen 8a und können anschließend nach unten d.h. nach unten in der Längsrichtung L der Haltekörper entfernt werden. Es ist dabei anzumerken, dass während dieses Wechselvorgangs die Position der Haltekörper 12 nicht verändert werden muss.

Fig. 2b zeigt eine Draufsicht von unten auf die in Fig. 2a gezeigte Anordnung. Man erkennt hier jeweils Stirnkörper 12b der Haltekörper 12. Diese Stirnkörper 12b können zum Montieren durch die Öffnungen 8a hindurchgeführt werden und anschließend in sich an eine Öffnung 8a anschließenden Nuten bzw. Langlöchern verschoben werden d.h. genauer wird das jeweilige Segment 2a bzw. 2b verschoben. Das Bezugszeichen 14 bezieht sich auf einen Verschließhebel zum Verbinden der beiden Segmente 2a, 2b miteinander. Dieser Verschließhebel 14 kann dabei um einen ersten Bolzen 13 geschwenkt werden und weist andererseits eine Ausnehmung 16 auf, welche in einem weiteren Bolzen 18 eingreift. Auf diese Weise ist es möglich, ohne Zuhilfenahme von Werkzeug schnell die beiden Segmente 2a und 2b miteinander zu verriegeln. In diesem verriegelten Zustand werden auch die beiden Segmente zusätzlich von den einzelnen Haltekörpern 12 bzw. den Stirnkörpern 12b dieser Haltekörper 12 gehalten.

Man erkennt, dass in dem Bereich des Übergangs zwischen den beiden Segmenten 2a und 2b erst durch die Zusammenfügung dieser beiden Segmente eine entsprechende Ausnehmung 4a ausgebildet wird. Dies bedeutet, dass sich in dem Randbereich eines jeden Segments jeweils eine halbe Ausnehmung befindet. Es wäre jedoch auch möglich, dass die beiden Segmente 2a und 2b in einem Bereich miteinander verbunden werden, in dem keine Ausnehmungen 4 vorgesehen sind.

Man erkennt, dass das die meisten Haltekörper 12 in Umfangsrichtung gleichweit beabstandet sind. Lediglich in denjenigen Bereich, in dem die beiden Segmente 2a und 2b jeweils ineinander gefügt werden sind die Haltekörper 12 in einem geringeren Abstand zueinander angeordnet, da in diesen Bereich eine höhere Stabilität der Anordnung gefordert wird.

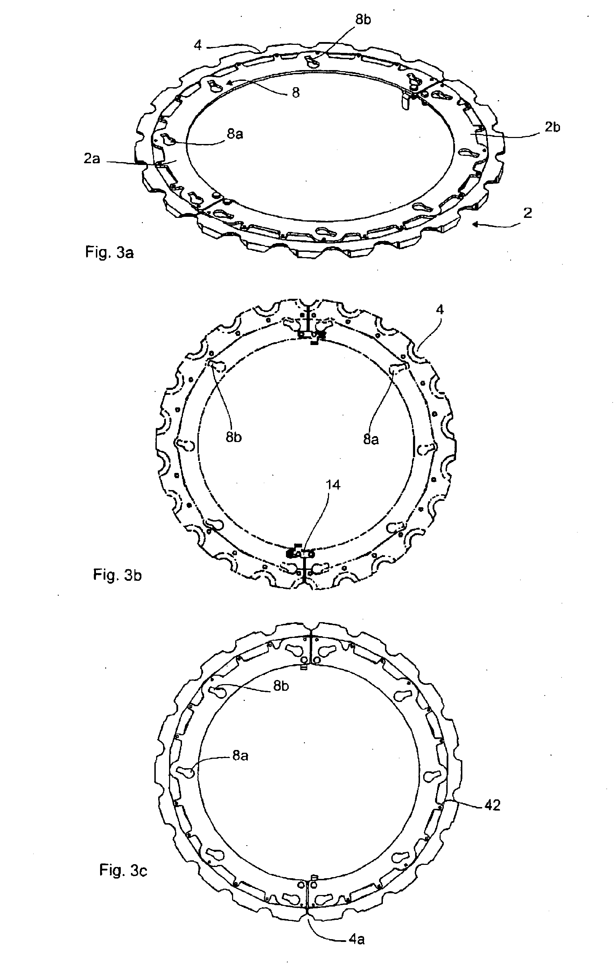

Fig. 3 zeigt eine perspektivische Ansicht eines Transportkörpers 2 bzw. der beiden Segmente 2a und 2b. Man erkennt hier, dass die Verbindungseinrichtung an der Unterseite des Transportkörpers 2 angeordnet ist. Die einzelnen Öffnungen 8 weisen hier jeweils einen kreisförmigen Öffnungsabschnitt 8a und einen sich nutartig von diesem Öffnungsabschnitt 8a erstreckendes Langloch 8b auf.

Die einzelnen Ausnehmungen 4 verjüngen sich hier von unten nach oben, um, wie oben erwähnt, an den Hals von Behältnissen angepasst werden zu können.

Fig. 3b zeigt eine Ansicht von unten auf einen Transportkörper 2. Man erkennt, dass die jeweiligen Langlöcher 8b sich jeweils nach außen erstrecken und in dem Bereich der Langlöcher jeweils an diese angepasste Ausnehmungen 9 in dem Transportkörper 2 verlaufen.

Fig. 3c zeigt eine Ansicht von oben auf einen Transportkörper 2. Man erkennt hier eine Vielzahl von Nietverbindungen 42, mit denen die beiden Teile dieses Transportkörpers miteinander fixiert sind. Die Langlöcher 8b der einzelnen Öffnungen 8 eines Segments erstrecken sich, wie in Fig. 3c gezeigt, jeweils im Wesentlichen in die gleiche Richtung. Auf diese Weise ist es möglich, das entsprechende Segment in genau einer Richtung in Fig. 3c in der Figurenebene zu bewegen, um es zu demontieren. Auf jeden Fall sind die Erstreckungsrichtungen dieser Langlöcher derart aneinander angepasst, dass mit einer genau definierten Bewegung das jeweilige Segment gelöst werden kann.

Dabei sind die einzelnen Öffnungen 8 derart angeordnet, dass sich deren Langlöcher zwar alle in der gleichen Richtung erstrecken, jedoch vorzugsweise keines dieser Langlöcher sich genau in der Umfangsrichtung des Transportkörpers 2 erstreckt. Auf diese Weise ist auch während des laufenden Betriebs der Transportkörper durch alle Haltekörper auch in Umfangsrichtung fixiert. Des Weiteren wäre es auch möglich, in den beiden Segmenten deren Öffnungen auch in Abhängigkeit von der Transportrichtung der Behältnisse anzuordnen. So könnten beispielsweise einzelne Langlöcher sich in Umfangsrichtung und zwar in der Drehrichtung des Transportkörpers im Arbeitsbetrieb erstrecken.

Fig. 4 zeigt eine teilgeschnittene Ansicht eines Haltekörpers 12. In diesem Haltekörper 12 ist ein Stirnkörper 12b angeordnet, der zwar durch die Öffnung 8a, nicht jedoch durch das Langloch 8b passt. Ein Eingriffsbereich 12a des Haltekörpers ruht im montierten Zustand in dem Langloch 8b. Dabei ist eine Breite B dieses Eingriffsbereichs an die Dicke des Transportkörpers bzw. des Transportrades 2 angepasst. Vorzugsweise weicht dieser Abstand weniger als 0,5 mm, bevorzugt weniger als 0,4 mm und besonders bevorzugt weniger als 0,2 mm von der Dicke des Transportkörpers ab.

Der Stirnkörper 12b, der wie oben erwähnt das Langloch 8b hintergreift ist über einen Verbindungsbolzen 32 in der Längsrichtung L fest mit dem Grundkörper 12e des Haltekörpers 12 verbunden. Das Bezugszeichen 12c bezieht sich auf einen Vorspannkörper, der in einem unteren Abschnitt des Grundkörpers 12e ruht und mittels eines elastischen Mittels wie eines O-Rings 34 geringfügig in der Längsrichtung L bewegbar ist. Das elastische Mittel kann dabei z.B. auch als Federelement, Federring oder sonstigen geeigneten Mitteln wie z. B. durch Magnetkraft ausgebildet sein. Auf diese Weise kann bei einem Einführen des Haltekörpers in die Langlöcher 8b der Haltekörper 12 mit dem Transportkörper 2 verspannt werden. Das Bezugszeichen 36 bezieht sich auf einen Spalt bzw. Zwischenraum, der eine geringfügige Bewegung des Vorspannkörpers 12c in der Längsrichtung L zulässt. Der Stirnkörper 12b ist hier als Zylinder mit Schlüsselfläche ähnlich einer Sechskantschraube ausgeführt, welche in den Verbindungsbolzen 32 eingeschraubt ist.

Falls die Klemmkraft bei einer festgelegten Materialstärke des Segmentes nicht ausreichend ist, ist es auch noch möglich, in den Eingriffsbereich 12a oder oberhalb des Vorspannkörpers 12c einen O-Ring oder ähnliches nachzulegen.

## Patentansprüche

1. Vorrichtung (1) zum Transportieren von Behältnissen mit einem um eine vorgegebene geometrische Drehachse (D) drehbar angeordneten, aus wenigstens zwei Segmenten (2a, 2b) aufgebauten Transportkörper (2), der eine Vielzahl von Öffnungen (8) und an seinem Aussenumfang eine Vielzahl von Ausnehmungen (4) zur Aufnahme wenigstens eines Bereichs der zu transportierenden Behältnisse (10) aufweist, mit einer Vielzahl von Haltekörpern (12) zum Halten des Transportkörpers (2), wobei sich eine Erstreckungrichtung (L) dieser Haltekörper (12) in einem von 0° verschiedenen Winkel gegenüber einer Ebene des Transportkörpers (2) erstreckt und wobei wenigstens ein Eingriffsbereich (12a) jedes dieser Haltekörper (12) in jeweils einer der Öffnungen (8) angeordnet ist, **dadurch gekennzeichnet, dass**
der Querschnitt wenigstens einiger dieser Öffnungen (8) größer ist als der Querschnitt des Eingriffsbereichs (12a) der Haltekörper (12) der in diesen Öffnungen (8) angeordnet ist, so dass die Segmente (2a, 2b) wenigstens zeitweise gegenüber den Haltekörpern (12) in einer senkrecht zu der Drehachse (D) stehenden Richtung bewegbar sind.

2. Vorrichtung (1) nach Anspruch 1,
**dadurch gekennzeichnet, dass** die Haltekörper (12) Haltestangen (12) sind und die Erstreckungsrichtung (L) eine Längsrichtung (L) der Haltestangen (12) ist.

3. Vorrichtung (1) nach Anspruch 1,
**dadurch gekennzeichnet, dass**
die Vorrichtung (1) wenigstens eine Verbindungseinrichtung (14, 16, 16) aufweist, um die Segmente (2a, 2b) lösbar miteinander zu verbinden.

4. Vorrichtung (1), nach wenigstens einem der vorangegangenen Ansprüche,
**dadurch gekennzeichnet, dass**
wenigstens eine Öffnung (8) einen kreisförmigen Öffnungsabschnitt (8a) und ein sich an diesen kreisförmigen Abschnitt (8a) anschließendes Langloch (8b) aufweist.

5. Vorrichtung (1) nach Anspruch 3,
**dadurch kennzeichnet, dass**
alle Öffnungen (8) eines Segments (2a, 2b) jeweils kreisförmige Öffnungsabschnitte (8a) und sich an diese kreisförmigen Abschnitte (8a) anschließende Langlöcher (8b) aufweisen, wobei sich die Langlöcher (8b) gegenüber den kreisförmigen Öffnungsabschnitten (8a) in im Wesentlichen der gleichen Richtung erstrecken.

6. Vorrichtung (1) nach wenigstens einem der vorangegangenen Ansprüche 3 - 4
**dadurch gekennzeichnet, dass** die Haltekörper (12) in dem Eingriffsbereich (12a) eine umlaufende Nut aufweisen, wobei der kleinste Durchmesser dieser Nut geringer ist als die Breite des Langlochs (8b).

7. Vorrichtung (1) nach wenigstens einem der vorangegangenen Ansprüche, 4 - 5
**dadurch gekennzeichnet, dass**
ein Stirnkörper (12b) der Haltekörper (12) durch wenigstens einen Bereich (8a) der Öffnung (8) durchführbar ist.

8. Vorrichtung (1) nach wenigstens einem der vorangegangenen Ansprüche 4 - 6
**dadurch gekennzeichnet, dass**
ein Stirnkörper (12b) der Haltekörpern (12) durch wenigstens einen Bereich (8b) der Öffnungen (8) nicht hindurchführbar ist.

9. Vorrichtung (1) nach wenigstens einem der vorangegangenen Ansprüche 2 - 8
**dadurch gekennzeichnet, dass**
die Verbindungsrichtung einen an einem Segment (2a, 2b) angeordneten schwenkbaren Hebel (14) aufweist, der eine Ausnehmung (16) aufweist, welche einen an einem anderen Segment (2b, 2a) angeordneten Bolzen (18) zum Verbinden der Segmente (2a, 2b) hintergreift.

10. Vorrichtung (1) nach Anspruch 8,
**dadurch gekennzeichnet, dass**
der Hebel (14) ohne Einsatz von Werkzeug von Hand betätigbar ist.

11. Vorrichtung (1) nach wenigstens einem der vorangegangenen Ansprüche 3 - 9,
**dadurch gekennzeichnet, dass**
sich keines der Langlöcher (4b) in der Umfangsrichtung des Transportkörpers (2) erstreckt.

12. Vorrichtung (1) nach wenigstens einem der vorangegangenen Ansprüche
**dadurch gekennzeichnet, dass**
wenigstens ein Haltekörper (12) einen Vorspannkörper (12c) aufweist, der gegenüber dem Stirnkörper (12b) in der Längsrichtung (2) des Haltekörpers (12) bewegbar ist.

13. Vorrichtung nach Anspruch 11,
**dadurch gekennzeichnet, dass** der Vorspannkörper (12c) gegenüber dem Stirnkörper (12b) vorgespannt ist.

14. Vorrichtung (1) nach wenigstens einem der vorangegangen Ansprüche
**dadurch gekennzeichnet, dass** alle Haltestangen (12) an einem gemeinsamten Träger angeordnet sind.

15. Anlage zum Verschließen von Behältnissen mit Verschlüssen mit einer Vorrichtung (1) nach wenigstens einem der vorangegangenen Ansprüche und einer Verschließeinrichtung, welche die Verschlüsse fest an den Behältnissen anbringt.

## Claims

1. Apparatus (1) for transporting containers, comprising a transport body (2) composed of at least two segments (2a, 2b) which is arranged such that it can rotate about a predefined geometric axis of rotation (D) and which has a plurality of openings (8) and on its outer circumference a plurality of recesses (4) for receiving at least one region of the containers (10) to be transported, comprising a plurality of holding bodies (12) for holding the transport body (2), wherein an extension direction (L) of these holding bodies (12) extends at an angle other than 0° relative to a plane of the transport body (2), and wherein at least one engagement region (12a) of each of these holding bodies (12) is arranged in each case in one of the openings (8), **characterised in that** the cross section of at least some of these openings (8) is larger than the cross section of the engagement region (12a) of the holding bodies (12) which is arranged in these openings (8), so that the segments (2a, 2b) are movable at least at times relative to the holding bodies (12) in a direction perpendicular to the axis of rotation (D).

2. Apparatus (1) according to claim 1, **characterised in that** the holding bodies (12) are holding rods (12) and the extension direction (L) is a longitudinal direction (L) of the holding rods (12).

3. Apparatus (1) according to claim 1, **characterised in that** the apparatus (1) comprises at least one connection device (14, 16, 16) for releasably connecting the segments (2a, 2b) to one another.

4. Apparatus (1) according to at least one of the preceding claims, **characterised in that** at least one opening (8) has a circular opening section (8a) and an elongate hole (8b) adjoining this circular section (8a).

5. Apparatus (1) according to claim 3, **characterised in that** all the openings (8) of a segment (2a, 2b) in each case have circular opening sections (8a) and elongate holes (8b) adjoining these circular sections (8a), wherein the elongate holes (8b) extend in essentially the same direction relative to the circular opening sections (8a).

6. Apparatus (1) according to at least one of the preceding claims 3 to 4, **characterised in that** the holding bodies (12) have a circumferential groove in the engagement region (12a), wherein the smallest diameter of this groove is smaller than the width of the elongate hole (8b).

7. Apparatus (1) according to at least one of the preceding claims 4 to 5, **characterised in that** an end body (12b) of the holding bodies (12) can be passed through at least one region (8a) of the opening (8).

8. Apparatus (1) according to at least one of the preceding claims 4 to 6, **characterised in that** an end body (12b) of the holding bodies (12) cannot be passed through at least one region (8b) of the openings (8).

9. Apparatus (1) according to at least one of the preceding claims 2 to 8, **characterised in that** the connection device comprises a pivotable lever (14) which is arranged on one segment (2a, 2b) and which has a recess (16) that engages behind a bolt (18) arranged on another segment (2b, 2a) in order to connect the segments (2a, 2b).

10. Apparatus (1) according to claim 8, **characterised in that** the lever (14) can be actuated manually without using a tool.

11. Apparatus (1) according to at least one of the preceding claims 3 to 9, **characterised in that** none of the elongate holes (4b) extends in the circumferential direction of the transport body (2).

12. Apparatus (1) according to at least one of the preceding claims, **characterised in that** at least one holding body (12) has a pretensioned body (12c) which is movable relative to the end body (12b) in the longitudinal direction (L) of the holding body (12).

13. Apparatus according to claim 11, **characterised in that** the pretensioned body (12c) is pretensioned relative to the end body (12b).

14. Apparatus (1) according to at least one of the preceding claims, **characterised in that** all the holding rods (12) are arranged on a common carrier.

15. Installation for closing containers with closures, comprising an apparatus (1) according to at least one of the preceding claims and a closing device which applies the closures securely to the containers.

## Revendications

1. Dispositif (1) pour le transport de récipients avec un corps de transport (2) rotatif autour d'un axe géométrique de rotation (D) défini et formé d'au moins deux segments (2a, 2b), lequel comporte une pluralité d'ouvertures (8) et, à sa périphérie extérieure, une pluralité de logements (4) pour la réception d'au moins une partie des récipients (10) à transporter, avec une pluralité de corps de maintien (12) pour le maintien du corps de transport (2), une direction d'extension (L) desdits corps de maintien (12) formant un angle différent de 0° avec un plan du corps de transport (2), et au moins une zone de préhension (12a) de chacun desdits corps de maintien (12) étant respectivement disposée dans une des ouvertures (8),
**caractérisé**
**en ce que** la section transversale d'au moins quelques-unes desdites ouvertures (8) est supérieure à la section transversale de la zone de préhension (12a) des corps de maintien (12) qui est disposée dans ces ouvertures (8), si bien que les segments (2a, 2b) sont au moins temporairement déplaçables par rapport aux corps de maintien (12), dans une direction perpendiculaire à l'axe de rotation (D).

2. Dispositif (1) selon la revendication 1,
**caractérisé en ce que** les corps de maintien (12) sont des barres de maintien (12), et **en ce que** la direction d'extension (L) est une direction longitudinale (L) des barres de maintien (12).

3. Dispositif (1) selon la revendication 1,
**caractérisé en ce que** ledit dispositif (1) comporte au moins un dispositif de connexion (14, 16, 16) pour raccorder les segments (2a, 2b) entre eux de manière amovible.

4. Dispositif (1), selon au moins une des revendications précédentes,
**caractérisé en ce qu'**au moins une ouverture (8) comporte une partie d'ouverture circulaire (8a) et un trou oblong (8b) adjacent à ladite partie d'ouverture circulaire (8a).

5. Dispositif (1) selon la revendication 3,
**caractérisé en ce que** toutes les ouvertures (8) d'un segment (2a, 2b) comportent des parties d'ouverture circulaires (8a) respectives et des trous oblongs (8b) adjacents auxdites parties d'ouverture circulaires (8a), les trous oblongs (8b) s'étendant sensiblement dans la même direction que les parties d'ouverture circulaires (8a).

6. Dispositif (1) selon au moins une des revendications 3 à 4,
**caractérisé en ce que** les corps de maintien (12) comportent une rainure périphérique dans la zone de préhension (12a), le plus petit diamètre de cette rainure étant inférieure à la largeur du trou oblong (8b).

7. Dispositif (1) selon au moins une des revendications 4 à 5,
**caractérisé en ce qu'**un corps frontal (12b) des corps de maintien (12) est insérable dans au moins une partie (8a) de l'ouverture (8).

8. Dispositif (1) selon au moins une des revendications 4 à 6,
**caractérisé en ce qu'**un corps frontal (12b) des corps de maintien (12) n'est pas insérable dans au moins une partie (8b) des ouvertures (8).

9. Dispositif (1) selon au moins une des revendications 2 à 8,
**caractérisé en ce que** le dispositif de connexion comporte un levier (14) pivotant disposé sur un segment (2a, 2b), lequel est pourvu d'un logement (16) accrochant un axe (18) disposé sur un autre segment (2b, 2a) pour la connexion des segments (2a, 2b).

10. Dispositif (1) selon la revendication 8,
**caractérisé en ce que** le levier (14) peut être actionné manuellement sans recourir à un outil.

11. Dispositif (1) selon au moins une des revendications 3 à 9,
**caractérisé en ce qu'**aucun des trous oblongs (4b) ne s'étend dans la direction périphérique du corps de transport (2).

12. Dispositif (1) selon au moins une des revendications précédentes,
**caractérisé en ce qu'**au moins un corps de maintien (12) comporte un corps de pré-contrainte (12c) déplaçable dans la direction longitudinale (2) du corps de maintien (12) par rapport au corps frontal (12b).

13. Dispositif selon la revendication 11,
**caractérisé en ce que** le corps de pré-contrainte (12c) est pré-contraint par rapport au corps frontal (12b).

14. Dispositif (1) selon au moins une des revendications précédentes,
**caractérisé en ce que** toutes les barres de maintien (12) sont disposées sur un support commun.

15. Installation d'obturation de récipients avec des bouchons, pourvue d'un dispositif (1) selon au moins une des revendications précédentes et d'un dispositif d'obturation qui applique fermement les bouchons sur les récipients.
